# EUROPÄISCHE PATENTANMELDUNG

(11) **EP 1 187 281 A2**
(43) Veröffentlichungstag der Anmeldung: **13.03.2002**
(21) Anmeldenummer: 01119146.7
(22) Anmeldetag: 08.08.2001
(51) Int. Cl.: H02G 3/04

(54) **Brandgeschützter Kabelkanal und Verfahren zur Herstellung desselben**

(30) Priorität: 02.09.2000 DE 10043355
(71) Anmelder: Thomas, Werner, 82069 Hohenschäftlarn (DE)
(72) Erfinder: Thomas, Werner, 82069 Hohenschäftlarn (DE)
(74) Vertreter: Kirschner, Klaus Dieter, Dipl.-Phys.

(57) **Zusammenfassung**

Ein brandgeschützter Kabelkanal ist aus einem Verbundwerkstoff gebildet, der aus einem nichtmetallischen Brandschutzmaterial (14) besteht, das mit einer Metalleinlage (12) verstärkt ist. Das Brandschutzmaterial (14) besteht aus einem Kunststoff, der unter Wärmeeinwirkung eine wärmeisolierende Dämmschicht ausbildet. Die Metalleinlage (12) besteht aus mit Öffnungen versehenem Metallblech. Der Kabelkanal wird dadurch hergestellt, daß eine mit Öffnungen versehene Metalleinlage gefertigt wird, daß die Metalleinlage mit einem unter Wärmeeinwirkung aufschäumenden Kunststoff beschichtet wird, und daß der Kabelkanal aus dem so gefertigten Verbundmaterial gefertigt wird.

## Beschreibung

Die vorliegende Erfindung betrifft einen brandgeschützten Kabelkanal und ein Verfahren zur Herstellung desselben.

Kabelkanalsysteme sind in unterschiedlicher Weise aus dem Stand der Technik bekannt. Sie können aus verschiedenen Materialien, wie Kunststoffen oder Metallen bestehen. Bei höheren Belastungen werden dabei überwiegend Elemente aus Metall zum Einsatz kommen. Die Kabelkanalsysteme bestehen aus Systemelementen, wie geraden Stücken, Bogenstücken, Kreuzungen, Abzweigstücken, Endstücken und dergleichen und aus Vorrichtungen zum Befestigen dieser Elemente an Wänden und Decken, um mit diesen Elementen ein System aus Kabelkanälen, das für den speziellen Anwendungsfall geeignet ist, zusammenzusetzen. Vorzugsweise werden als Systemelemente Metallprofile, die aus Gründen der Gewichts- und Materialersparnis eine Vielzahl von Öffnungen aufweisen, verwendet.

Solche Kabelkanäle bieten im Brandfall keinen Brandschutz für die darin geführten Kabel, da das häufig verwendete Metall ein guter Wärmeleiter ist und da die Kabel nicht von der Umgebung abgeschlossen sind, weil in den Metallprofilen gewöhnlich Löcher insbesondere zur Gewichtsreduzierung vorgesehen sind. In feuergefährdeten Räumen werden die Kabelkanäle daher zusätzlich mit einer Brandschutzverkleidung aus Brandschutzplatten umbaut, die aus einem feuerfesten oder feuerhemmenden Material besteht. Diese Verkleidung wird, nachdem das Kabelkanalsystem aus seinen einzelnen Systemteilen zusammengebaut und befestigt wurde, um dieses System außen herum angebracht. Dies ist ein mühsames und sehr arbeitsaufwendiges Verfahren. Außerdem macht die zusätzliche Verkleidung den Kabelkanal recht voluminös. Auch im Falle einer Inspektion der darin geführten Kabel muß diese Verkleidung zuerst wieder entfernt werden. In der Praxis wird das Kabelkanalsystem von einer Elektrofirma installiert, und die Brandschutzverkleidung wird von einer Brandschutzfachfirma nach der Verlegung der Elektrokabel durchgeführt, so daß tatsächlich zwei Fachfirmen beteiligt sind, um den Kabelkanal zu installieren. Dies ist nicht nur kostspielig, sondern gibt auch Probleme bei der Gewährleistungsfrage, weil zwei Firmen an der Erstellung des Brandschutz-Kabelsystems beteiligt sind

Es ist des weiteren bekannt, herkömmliche Kabelrinnen aus Metall, die mit Elektrokabeln bestückt sind, als offenes System vor Ort und nach dem Kabelverzug mit einem im Brandfall aufschäumenden Dämm-Material durch Besprühen zu beschichten. Für dieses Kabelbeschichtungsverfahren gibt es keine deutsche Prüfnorm, so daß dieses Verfahren ohne Zulassung zum Einsatz kommen muß und nur als Kurzschlußverzögerer ohne definierte Feuerwiderstandsdauer zum Einsatz kommt. Auch in diesem Fall müssen die Arbeiten von zwei Fachfirmen ausgeführt werden, nämlich von der Elektrofirma bei der Installation der Kabelrinne und einer weiteren Fachfirma, die das Besprühen der Kabel und der Rinne durchführen. Außerdem muß die Anordnung bei jeder Nachbelegung eines Kabels wieder vor Ort nachbeschichtet werden, wobei wie bei der Erstbeschichtung durch den Sprühnebel andere Komponenten des Baus verschmutzt werden.

Zu den genannten Problemen kommt noch hinzu, daß nachbelegte Kabel oft nicht mehr beschichtet werden, weil dies vergessen wird. Dadurch ergibt sich eine große Brandgefahr, so daß das bekannte System aus diesem Grund nicht sicher genug ist.

Aufgabe der vorliegenden Erfindung ist es daher, einen brandgeschützten Kabelkanal und ein Verfahren zur Herstellung desselben anzugeben, wobei, um die erforderlichen Brandschutznormen zu erfüllen, der Kabelkanal nicht mit einer zusätzlichen Brandschutzverkleidung umbaut werden muß.

Dazu ist der erfindungsgemäße Kabelkanal dadurch gekennzeichnet, daß der Kabelkanal aus einem Verbundwerkstoff gebildet ist, der aus einem nichtmetallischen Brandschutzmaterial besteht, das mit einer Metalleinlage verstärkt ist. Im Fall des Einwirkens von Hitze und/oder Feuer schützt das Brandschutzmaterial die Systemelemente des Kabelkanals und die im Kabelkanalsystem geführten Kabel vor der einwirkenden Hitze und/oder den Flammen, während die Metalleinlage für die mechanische Festigkeit des Kabelkanals sorgt. Der Kabelkanal kommt somit ohne eine gesonderte Umhüllung im Falle eines Brandes oder einer anderweitigen Hitzeeinwirkung aus und bietet einen zuverlässigen Schutz der in den Kabelkanal geführten Kabel.

Bei dem erfindungsgemäßen Kabelkanal handelt es sich in vorteilhafter Weise um ein ganzheitliches de- und remontierbares Kabelkanalsystem, welches so ausgelegt werden kann, daß es der DIN-Norm 4102 entspricht, so daß derartige Kabelkanalsysteme normgerecht ausgeführt werden können. Ein weiterer Vorteil besteht darin, daß das Kabelkanalsystem von der Elektrofirma installiert wird, die auch die Elektrokabel verlegt, so daß keine zweite Firma für die Verlegung herangezogen werden muß und die Gewährleistungsfrage einfacher zu beurteilen ist.

Durch die Ausführung des erfindungsgemäßen Kabelkanals mit Verbundmaterial ergibt sich auch eine große Platzeinsparung gegenüber dem früheren System, bei dem eine Kabelrinne mit Brandschutzmaterialplatten umbaut wurde. Der Platzbedarf eines solchen Systems stellt jedoch ein Problem dar, wenn man bedenkt, daß derartige Kabelführungseinrichtungen oft in einem beschränkten Raum untergebracht werden müssen. Auch ist die einfache De- und Remontage ein großer Vorteil im Hinblick auf Kostenersparnis bei der Montage, die bis zu 40 % der Kosten betragen kann. Was die Sicherheitsfrage beim Nachbelegen eines solchen Kabelkanals betrifft, so wird der Kabelkanal automatisch nach dem Nachbelegen wieder durch Auflegen des Deckels geschlossen (der Deckel ist bereits vorhanden), so daß der volle Brandschutz wieder hergestellt wird.

Eine vorteilhafte Ausgestaltung des erfindungsgemäßen Kabelkanals ist dadurch gekennzeichnet, daß der Kabelkanal aus einer Kabelrinne aus Verbundmaterial und einem damit lösbar verbundenen Deckel aus Verbundmaterial besteht. Damit wird ein Kabelkanalsystem geschaffen, welches leicht de- und remontierbar ist, so daß Nachbelegungen durch Kabel leicht und ohne großen Aufwand durchgeführt werden können.

Eine weitere vorteilhafte Ausgestaltung des erfindungsgemäßen Kabelkanals ist dadurch gekennzeichnet, daß der Kabelkanal aus einem an einer Decke oder einer Wand montierbaren Unterteil aus Verbundmaterial und einem an dem Unterteil lösbar montierbaren Oberteil aus Verbundmaterial besteht. Auch hier ergeben sich die Vorteile eines leicht montierbaren und remontierbaren Systems. Derartige Kabelkanäle können bisher noch durch Klammerung oder Verschraubung von Plattenteilen brandsicher gemacht werden, so daß eine De- und Remontage nur bedingt möglich ist. Im Gegensatz dazu ergibt sich bei dem erfindungsgemäßen System eine leichte Montage, Demontage und Remontage.

Eine weitere vorteilhafte Ausgestaltung des erfindungsgemäßen Kabelkanals ist dadurch gekennzeichnet, daß an der Kabelrinne bzw. dem Unterteil oder dem Oberteil ein Kabelschott aus Verbundmaterial angeordnet ist. Dadurch kann ein Kabelschott leicht in das Kabelkanalsystem integriert werden, und auch an dem Kabelschott ist ein ausreichender Brandschutz gewährleistet.

Eine vorteilhafte Ausgestaltung des erfindungsgemäßen Kabelkanals ist dadurch gekennzeichnet, daß das Brandschutzmaterial aus einem Kunststoff besteht, der unter Wärmeeinwirkung eine wärmeisolierende Dämmschicht ausbildet. Derartige Kunststoffe sind im Brandschutz bekannt und haben sich im Einsatz bewährt. Der Aufschäum-Effekt kann bewirken, daß die isolierende Schaumschicht bis zu der 40-fachen Dicke wie die ursprüngliche Materialstärke aufweist.

Eine vorteilhafte Ausgestaltung des erfindungsgemäßen Kabelkanals ist dadurch gekennzeichnet, daß der Kunststoff im Brandfall unter Wärmeeinwirkung aufschäumt. Die dabei entstehende Schaumschicht ist viel dicker als die ursprüngliche Schicht und sie schließt auch eine Vielzahl von Luftbläschen und Hohlräumen ein, so daß sie sehr gut wärmeisolierend wirkt.

Eine vorteilhafte Ausgestaltung des erfindungsgemäßen Kabelkanals ist dadurch gekennzeichnet, daß das Brandschutzmaterial eine oder mehrere Verbindungen aus der Gruppe bestehend aus (2-chlorethyl-1-methylethyl)-phosphat, (2-chlorethyl)-phosphat, 2-chloracetamid und Natriumfluorid enthält. Dies ist eine bewährte Zusammensetzung für das Brandschutzmaterial, es können jedoch auch andere, bekannte Matereialien eingesetzt werden, wie sie derzeit im Brandschutz verwendet werden.

Eine vorteilhafte Ausgestaltung des erfindungsgemäßen Kabelkanals ist dadurch gekennzeichnet, daß das Brandschutzmaterial im Brandfall unter Wärmeeinwirkung kristallisiert. Auch dieses Merkmal eines Brandschutzmaterials ist im Brandfall nützlich, weil eine zusätzliche Dämmung geschaffen wird.

Eine vorteilhafte Ausgestaltung des erfindungsgemäßen Kabelkanals ist dadurch gekennzeichnet, daß das Brandschutzmaterial im Brandfall unter Wärmeeinwirkung chemisch gebundenes Wasser zur Kühlung freigibt. Die zusätzliche Wasserkühlung trägt in vorteilhafter Weise zur Brandeindämmung bei.

Eine vorteilhafte Ausgestaltung des erfindungsgemäßen Kabelkanals ist dadurch gekennzeichnet, daß die Metalleinlage aus mit Öffnungen versehenem Metallblech besteht. Eine derartige Metalleinlage hat einerseits die entsprechende Stabilität, um daraus Kabelrinnen und Kabeldeckel zu formen, und das Gewicht der Metalleinlage wird durch die Öffnungen verringert.

Eine vorteilhafte Ausgestaltung des erfindungsgemäßen Kabelkanals ist dadurch gekennzeichnet, daß die Öffnungen gestanzt sind. Diese Metalleinlage kann in vorteilhafter Weise so hergestellt werden, wie bisherige Kabelrinnen. Dabei ist jedoch zu beachten, daß, da es sich bei dem erfindungsgemäßen Kabelkanal um ein Verbundmaterial handelt, die Güte des Metalls gering sein kann, weil Rost und dergleichen keine Rolle spielt aufgrund der Tatsache, daß das Metall vollständig von dem Kunststoff umgeben ist, das heißt, daß es sich eben um ein echtes Verbundmaterial handelt.

Eine vorteilhafte Ausgestaltung des erfindungsgemäßen Kabelkanals ist dadurch gekennzeichnet, daß die Öffnungen durch Ankerben und Strecken eines Metallblechs gefertigt sind. Die Herstellung von Öffnungen in einem Metallblech durch Ankerben und Strecken ist an sich aus der DE 25 49 072 B2 bekannt. Das nach diesem bekannten Verfahren hergestellte Metallblech mit Durchbrüchen eignet sich als Metalleinlage bei dem Verbundmaterial für die erfindungsgemäßen Kabelkanäle insbesondere deshalb, weil durch die Form der durch Ankerben und Strecken erzeugten Durchbrüche eine sichere Verbindung der inneren und äußeren Kunststoffschicht auf den beiden Seiten der Metalleinlage erfolgen kann, so daß sich der Kunststoff nicht von der Metalleinlage lösen kann.

Eine vorteilhafte Ausgestaltung des erfindungsgemäßen Kabelkanals ist dadurch gekennzeichnet, daß die Öffnungen des Metallblechs durch das Brandschutzmaterial verschlossen sind. Damit ist im Brandfall sichergestellt, daß von Anfang an keine Dämpfe oder Rauch aus dem Kabelkanal austreten können.

Eine vorteilhafte Ausgestaltung des erfindungsgemäßen Kabelkanals ist dadurch gekennzeichnet, daß das Brandschutzmaterial ein unter Wärmeeinwirkung aufschäumender Kunststoff ist, und daß die Öffnungen durch das Brandschutzmaterial nicht geschlossen jedoch so dimensioniert sind, daß sie beim Aufschäumen des Kunststoffs verschlossen werden. Aus Gründen der besseren Wärmeableitung, die beispielsweise durch bei der Belastung warm werdende Kabel erzeugt wird, aus dem Kabelkanal und für einen besseren Einblick in den Kabelkanal von außen kann es jedoch wünschenswert sein, daß die Öffnungen im Kabelkanal erhalten bleiben. Die Öffnungen in dem Kabelkanal können auch die in der Praxis oft verwendeten Belüftungssysteme (Brandschutzsteine, Belüftungsbox) ersetzen, so daß diese zusätzlichen Maßnahmen in vorteilhafter Weise entfallen können. Das Verbundmaterial wird dann so gefertigt, daß der Großteil der Öffnungen nicht durch das Brandschutzmaterial verschlossen ist. Im Falle der Einwirkung von Hitze und/oder Feuer wird durch das Aufschäumen und Aufquellen des Brandschutzmaterials dennoch ein zuverlässiges Schließen dieser Öffnungen und ein Rundum-Brandschutz erreicht.

Eine vorteilhafte Ausgestaltung des erfindungsgemäßen Kabelkanals ist dadurch gekennzeichnet, daß das Brandschutzmaterial auf die Metalleinlage aufgespritzt oder durch Tauchen aufgebracht ist. Auf diese Weise ist der Verbundwerkstoff aus Metalleinlage und Kunststoffbeschichtung zuverlässig und mit geringem Aufwand herzustellen.

Eine vorteilhafte Ausgestaltung des erfindungsgemäßen Kabelkanals ist dadurch gekennzeichnet, daß das Brandschutzmaterial eine Dicke von bis zu einigen Millimetern aufweist. Die Dicke des Brandschutzmaterials richtet sich selbstverständlich auch nach dem verwendeten Material und der gewünschten, klassifizierten Feuerwiderstandsdauer, beispielsweise 30, 60 oder 90 Minuten. Da die Schichtdicke unter dem Gesichtspunkt der Konstruktion keine entscheidende Rolle spielt, kann die Schicht ohne Probleme in der gewünschten Schichtdicke hergestellt werden.

Zur Lösung der genannten Aufgabe ist ein Verfahren zur Herstellung eines Kabelkanals dadurch gekennzeichnet, daß eine mit Öffnungen versehene Metalleinlage gefertigt wird, daß die Metalleinlage mit einem unter Wärmeeinwirkung aufschäumenden Kunststoff zur Bildung eines Verbundmaterials beschichtet wird, und daß der Kabelkanal aus dem so gefertigten Verbundmaterial gefertigt wird. Dabei ist vorteilhaft, daß der Kabelkanal inklusive Brandschutz werkseitig hergestellt wird, so daß bauseitig keine weiteren Herstellungsschritte mehr erforderlich sind, wie es bei der nachträglichen Anbringung von Brandschutzplatten der Fall ist.

Eine vorteilhafte Ausgestaltung des erfindungsgemäßen Verfahrens ist dadurch gekennzeichnet, daß eine mit Öffnungen versehene Metalleinlage durch Stanzen eines Metallblechs gefertigt wird.

Eine vorteilhafte Ausgestaltung des erfindungsgemäßen Verfahrens ist dadurch gekennzeichnet, daß eine mit Öffnungen versehene Metalleinlage durch Ankerben und anschließendes Strecken von Metallblech gefertigt wird.

Eine vorteilhafte Ausgestaltung des erfindungsgemäßen Verfahrens ist dadurch gekennzeichnet, daß das Metallblech zum Ankerben und anschließende Strecken durch Kerb- und Streckwalzen geführt wird.

Eine vorteilhafte Ausgestaltung des erfindungsgemäßen Verfahrens ist dadurch gekennzeichnet, daß an dem Kabelkanal bzw. der Kabelrinne oder dem Unterteil in Kabelschott aus Verbundmaterial angebracht wird, indem eine Metalleinlage des Kabelschotts an der Metalleinlage des Kabelkanals befestigt wird und die Metalleinlage des Kabelkanals und des Kabelschotts sodann mit dem Brandschutzmaterial beschichtet wird.

Eine vorteilhafte Ausgestaltung des erfindungsgemäßen Verfahrens ist dadurch gekennzeichnet, daß an dem Kabelkanal bzw. der Kabelrinne oder dem Unterteil in Kabelschott aus Verbundmaterial angebracht wird, indem das Kabelschott aus Verbundmaterial gefertigt und sodann an dem Kabelkanal befestigt wird.

Eine vorteilhafte Ausgestaltung des erfindungsgemäßen Verfahrens ist dadurch gekennzeichnet, daß die Metalleinlage mit einem unter Wärmeeinwirkung aufschäumenden Kunststoff dadurch beschichtet wird, daß die Metalleinlage mit dem Kunststoff umspritzt wird.

Eine vorteilhafte Ausgestaltung des erfindungsgemäßen Verfahrens ist dadurch gekennzeichnet, daß die Metalleinlage mit einem unter Wärmeeinwirkung aufschäumenden Kunststoff dadurch beschichtet wird, daß der Kunststoff auf die Metalleinlage auflaminiert wird.

Eine vorteilhafte Ausgestaltung des erfindungsgemäßen Verfahrens ist dadurch gekennzeichnet, daß die Metalleinlage mit einem unter Wärmeeinwirkung aufschäumenden Kunststoff dadurch beschichtet wird, daß die Metalleinlage in ein Bad mit dem Kunststoff eingetaucht wird.

Insgesamt liefert die vorliegende Erfindung einen Kabelkanal, der einen zuverlässigen Schutz des Systems selbst und der im System geführten Kabel gegenüber der Einwirkung von Feuer und von Hitze gewährleistet. Die einzelnen Systemelemente entsprechen in ihren Abmessungen und Ausgestaltungen im wesentlichen den aus üblichen Kabelkanalsystemen bekannten Systemelementen und können deswegen ebenso wie diese leicht vorgefertigt und dann einfach verlegt werden. Bei der Verwendung des erfindungsgemäßen Kabelkanals muß als Brandschutz keine getrennte Verkleidung angebracht werden. Außerdem sind die Elemente relativ handlich, da das Verbundmaterial eine relativ geringe Dicke aufweist und erst durch die chemische Reaktion im Brandfall eine voluminösere Dämmschicht ausbildet. Somit bietet die Erfindung ein leicht zu verlegendes, kostengünstiges, flexibles Kabelkanalsystem, das dennoch einen guten Brandschutz gewährleistet.

Ausführungsbeispiele der Erfindung werden nun anhand der beigefügten Zeichnungen beschrieben. Es zeigen:
Fig. 1 einen Schnitt durch einen erfindungsgemäßen Kabelkanal aus Verbundwerkstoff;
Fig. 2 eine Seitenansicht des Kabelkanals von Fig. 2 mit einer Anschlußstelle;
Fig. 3 ein Schnitt durch die Anschlußstelle des erfindungsgemäßen Kabelkanals;
Fig. 4 einen Schnitt durch einen an einer Decke montierbaren Kabelkanal; und
Fig. 5 eine Seitenansicht eines Kappenschlosses, wie es bei der Anschlußstelle von Fig. 2 oder zum Verbinden der Kabelkanalteile in Fig. 4 verwendbar ist;
Fig. 6 einen Schnitt durch einen erfindungsgemäßen Kabelkanal mit Kabelschott; und
Fig 7 eine Seitenansicht des Kabelkanals mit Kabelschott von Fig. 6.

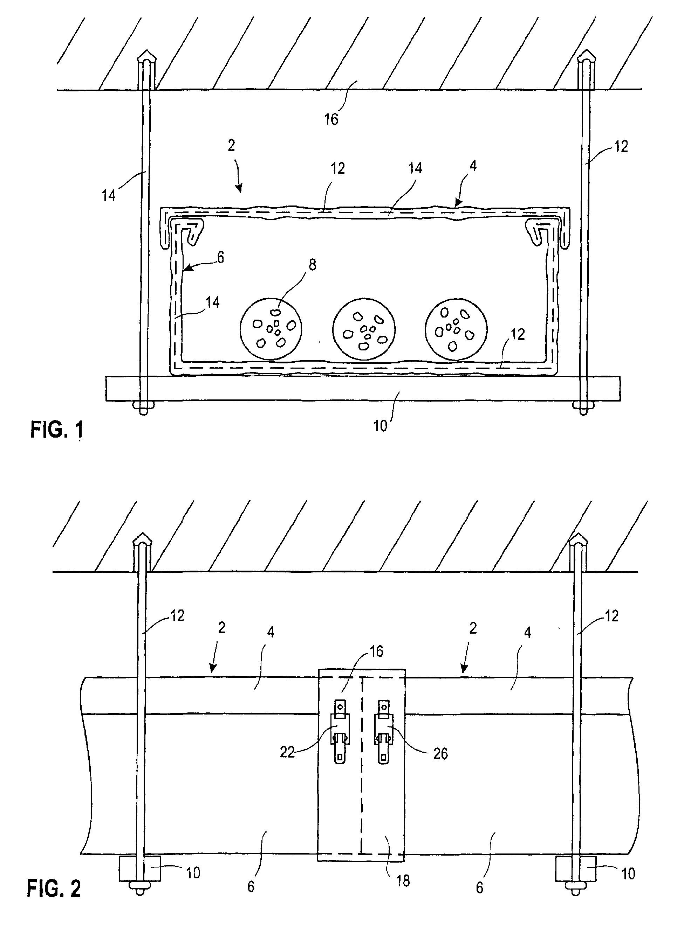

Der in Fig. 1 gezeigte Kabelkanal 2 besteht aus einem Deckel 4 und einer Kabelrinne 6, in der einige Kabel 8 schematisch dargestellt sind. Die Kabelrinne 6 liegt auf Trägern 10, die über Gewindestangen 12, 14, beispielsweise an einer Decke 16 befestigt sind.

Sowohl der Deckel 4 als auch die Kabelrinne 6 bestehen aus einem Verbundmaterial, das eine Metalleinlage aus einem mit Öffnungen versehenen Metallblech 12 und einem im Brandfall wärmedämmend und flammhemmend wirkenden Kunststoff 14 umfaßt. Die äußere und innere Kunststoffschicht ist über die Löcher zu einer einheitlichen Ummantelung für die Metalleinlage verbunden.

Bei dem Ausführungsbeispiel von Fig. 1 ist der Deckel 4 lose auf die Kabelrinne 6 aufgelegt, wird jedoch durch eine Verbindungseinrichtung 16 an der Stoßstelle zwischen zwei Kabelkanalabschnitten 2 (Fig. 2) gehalten.

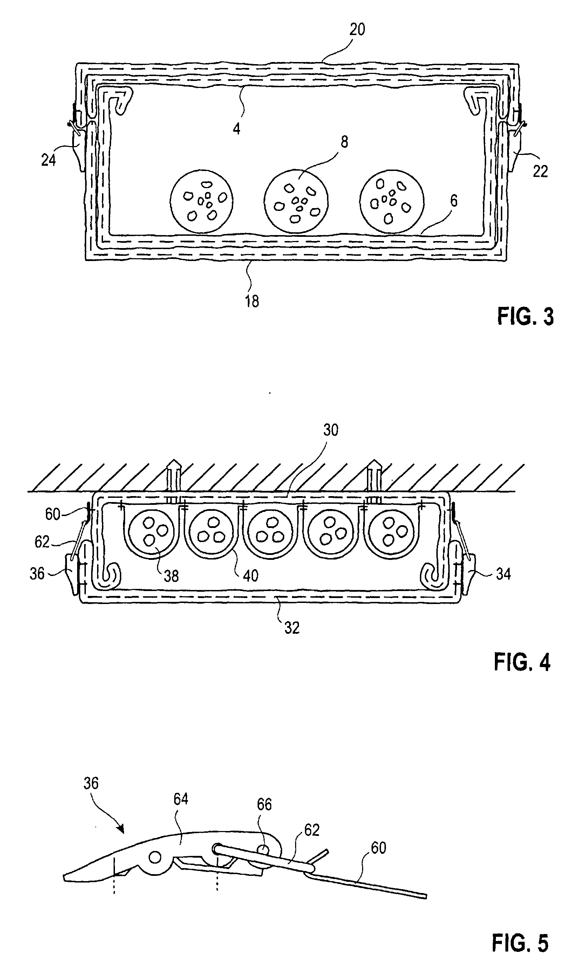

In Fig. 3 ist eine Anschlußstelle im Schnitt dargestellt, wobei ersichtlich ist, daß die Anschlußvorrichtung aus einem Rinnenteil 18 und einem Deckelteil 20 besteht, die jeweils die Kabelrinne 6 bzw. den Deckel 4 übergreifen und mit Kappenschlössern 22, 24 miteinander verbunden sind. Wie aus Fig. 2 zu ersehen ist, sind jeweils zwei Kappenschlösser 22, 26 auf jeder Seite der Verbindungseinrichtungen vorgesehen. Die Verbindungseinrichtung stellt nicht nur den Anschluß zwischen zwei Kabelkanalabschnitten her, sondern hält auch den Deckel 4 des Kabelkanals auf der Kabelrinne 6 fest.

Fig. 4 zeigt ein anderes Ausführungsbeispiel des erfindungsgemäßen Kabelkanals, der aus einem an einer Decke oder einer Wand montierbaren Unterteil 30 aus Verbundmaterial und einem an dem Unterteil lösbar montierbaren Oberteil 32 ebenfalls aus Verbundmaterial besteht. Das Oberteil 32 ist lösbar an dem Unterteil 30 durch ein Bügel-Clip-System verbunden, welches wiederum durch ein Kappenschloß unter gewissen Abständen in Längsrichtung des Kabelkanals auf beiden Seiten des Kabelkanals verwirklicht ist. An dem Unterteil 30 sind die schematisch dargestellten Kabel 38 durch Schellen 40 hängend montiert. Wenn Kabelarbeiten notwendig werden, kann das Oberteil 32 durch Lösen der Kappenschlösser 34, 36 abgenommen werden.

Ein Kappenschloß der in den Ausführungsbeispielen der Figuren 1 bis 4 gezeigten Art ist in Fig. 5 dargestellt und besteht aus einem Haken 60, einem Bügel 62, der in den Haken eingehängt wird, und einem Kappenbügel 64, der um eine Achse 66 kippbar gelagert ist und in der in Fig. 5 gezeigten Stellung eine Ruhelage hat, aus der er nur durch Krafteinwirkung herausgekippt werden kann, um das Kappenschloß zu öffnen.

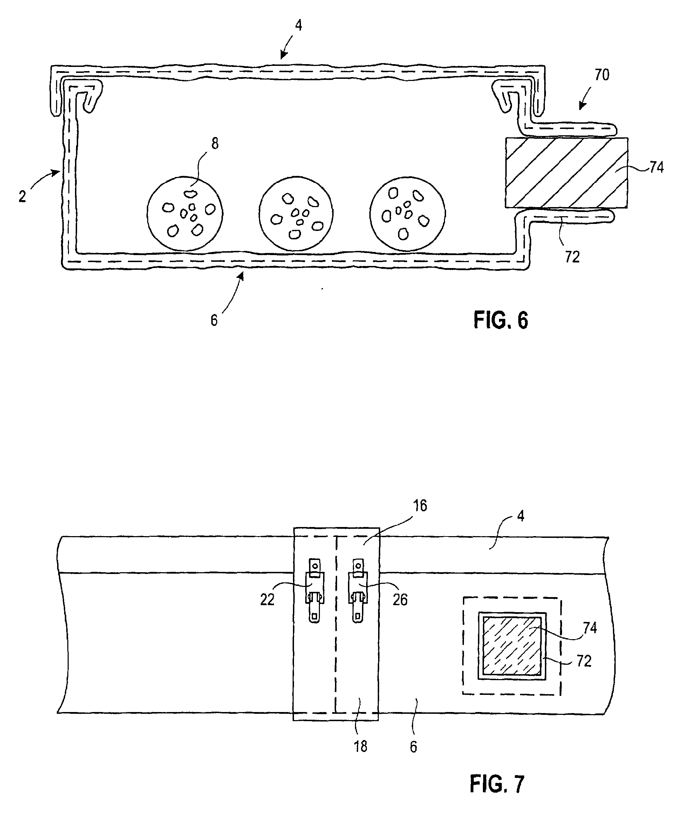

Fig. 6 zeigt einen Kabelkanal ähnlich wie Fig. 1 mit einem Deckel 4 und einem Unterteil 6, wobei ein Kabelschott 70 an dem Kabelkanal 2 vorgesehen ist. Das Kabelschott 70 besteht aus einem Schottkasten 72 aus Verbundmaterial und einem Systemstein 74 der in den Schottkasten 72 eingesetzt ist. Durch ein derartiges Kabelschott 70 werden Kabel aus den Kabelkanälen herausgeführt, bspw. für eine Raumversorgung. Das Kabelschott hat dann die gleiche Feuerwiderstandsklasse wie das Kanalsystem, bspw. wird ein S 30-Schott für eine Feuerwiderstandsdauer von 30 Minuten eingesetzt. Der Systemstein kann auch aus einem FEP-Schaum bestehen, der nach Bedarf mit Kabeln einfach durchstoßen wird. Gemäß Fig. 6 ist das Kabelschott 70 an der Kabelrinne 6 angeordnet.

Ein derartiges Kabelschott kann aus bei dem Ausführungsbeispiel nach Figur 4 an dem Unterteil 30 oder dem Oberteil 32 vorgesehen sein.

Der Kabelkanal nach den Ausführungsbeispielen der Erfindung läßt sich auf einfache Weise dadurch herstellen, daß eine mit Öffnungen versehene Metalleinlage gefertigt wird, daß die Metalleinlage mit einem unter Wärmeeinwirkung aufschäumenden Kunststoff zur Bildung eines Verbundmaterials beschichtet wird, und daß der Kabelkanal aus dem so gefertigten Verbundmaterial gefertigt bzw. aufgebogen wird. Wenn die Metalleinlage Öffnungen enthalten soll, können diese durch Stanzen eines Metallblechs oder durch Ankerben und anschließendes Strecken von Metallblech durch Kerb- und Streckwalzen hergestellt werden. Die Metalleinlage kann mit dem Kunststoff dadurch beschichtet werden, daß die Metalleinlage mit dem Kunststoff umspritzt wird, daß der Kunststoff auflaminiert wird oder daß die Metalleinlage in ein Bad mit dem Kunststoff eingetaucht wird. Die Kabelkanalelemente können daher werksseitig konfektioniert werden, so daß sie am Bau nur noch montiert werden müssen.

Auch das Kabelschott läßt sich auf einfache Weise an dem Kabelkanal dadurch anbringen, daß eine Metalleinlage des Kabelschotts an der Metalleinlage des Kabelkanals befestigt wird und die Metalleinlage des Kabelkanals und des Kabelschotts sodann mit dem Brandschutzmaterial beschichtet wird. Alternativ kann das Kabelschott dadurch hergestellt werden, daß das Kabelschott aus Verbundmaterial gefertigt und sodann an dem Kabelkanal befestigt wird.

## Patentansprüche

1. Brandgeschützter Kabelkanal **dadurch gekennzeichnet, daß** der Kabelkanal aus einem Verbundwerkstoff gebildet ist, der aus einem nichtmetallischen Brandschutzmaterial (14) besteht, das mit einer Metalleinlage (12) verstärkt ist.

2. Kabelkanal nach Anspruch 1, **dadurch gekennzeichnet, daß** der Kabelkanal aus einer Kabelrinne (6) aus Verbundmaterial und einem damit lösbar verbundenen Deckel (4) aus Verbundmaterial besteht.

3. Kabelkanal nach Anspruch 1, **dadurch gekennzeichnet, daß** der Kabelkanal aus einem an einer Decke oder einer Wand montierbaren Unterteil (30) aus Verbundmaterial und einem an dem Unterteil lösbar montierbaren Oberteil (32) aus Verbundmaterial besteht.

4. Kabelkanal nach einem der Ansprüch 1 bis 3, **dadurch gekennzeichnet, daß** an der Kabelrinne (6) bzw. dem Unterteil (30) oder dem Oberteil (32) ein Kabelschott aus Verbundmaterial angeordnet ist.

5. Kabelkanal nach einem der Ansprüche 1 bis 4, **dadurch gekennzeichnet, daß** das Brandschutzmaterial (14) aus einem Kunststoff besteht, der unter Wärmeeinwirkung eine wärmeisolierende Dämmschicht ausbildet

6. Kabelkanal nach einem der vorherigen Ansprüche, **dadurch gekennzeichnet, daß** die Metalleinlage (12) aus mit Öffnungen versehenem Metallblech besteht.

7. Kabelkanal nach einem der Ansprüche 6, **dadurch gekennzeichnet, daß** die Öffnungen des Metallblechs durch das Brandschutzmaterial (14) verschlossen sind.

8. Verfahren zur Herstellung eines Kabelkanals, **dadurch gekennzeichnet, daß**:
- eine mit Öffnungen versehene Metalleinlage gefertigt wird, daß
- die Metalleinlage mit einem unter Wärmeeinwirkung aufschäumenden Kunststoff beschichtet wird, und daß
- der Kabelkanal aus dem so gefertigten Verbundmaterial gefertigt wird.

9. Verfahren nach Anspruch 8, **dadurch gekennzeichnet, daß** an dem Kabelkanal bzw. der Kabelrinne oder dem Unterteil in Kabelschott aus Verbundmaterial angebracht wird, indem eine Metalleinlage des Kabelschotts an der Metalleinlage des Kabelkanals befestigt wird und die Metalleinlage des Kabelkanals und des Kabelschotts sodann mit dem Brandschutzmaterial beschichtet wird.

10. Verfahren nach Anspruch 8 oder 9, **dadurch gekennzeichnet, daß** an dem Kabelkanal bzw. der Kabelrinne oder dem Unterteil in Kabelschott aus Verbundmaterial angebracht wird, indem das Kabelschott aus Verbundmaterial gefertigt und sodann an dem Kabelkanal befestigt wird.
